Europäisches Patentamt

European Patent Office

Office européen des brevets

(11) Veröffentlichungsnummer: **0 375 846**

**A1**

## (12) EUROPÄISCHE PATENTANMELDUNG

(21) Anmeldenummer: 89117792.5

(22) Anmeldetag: 26.09.89

(51) Int. Cl.⁵: **F16J 15/34**

(30) Priorität: 16.12.88 DE 3842451

(43) Veröffentlichungstag der Anmeldung:
04.07.90 Patentblatt 90/27

(84) Benannte Vertragsstaaten:
DE FR GB IT NL

(71) Anmelder: **Feodor Burgmann Dichtungswerke GmbH & Co.**
**Äussere Sauerlacher Strasse 6-8**
**D-8190 Wolfratshausen 1(DE)**

(72) Erfinder: **Steigenberger, Georg**
**Brunnenstrasse 22**
**D-8193 Holzhausen(DE)**
Erfinder: **Kollinger, Dipl. Ing. Rudolf**
**Richard-Wagner Str.10**
**D-8034 Germering(DE)**

(74) Vertreter: **Empl, Karl et al**
**Patentanwälte Dipl.-Ing. K. Empl Dipl.-Ing.,**
**Dipl.-Wirtsch.-Ing. K. Fehners**
**Schumannstrasse 2**
**D-8000 München 80(DE)**

(54) **Gleitringdichtung.**

(57) Eine Gleitringdichtung, deren mit der Welle (3) in einer vorgegebenen Drehrichtung (2) rotierender Gegenring (15) eine Mehrzahl gerader Nuten (20) in seiner Gleitfläche (17) aufweist, welche von dem abzudichtenden, ein unter Druck ($P_1$) stehendes Fluid enthaltenden ersten Raum ausgehen, auf die vorgegebene Drehrichtung (2) bezogen nach vorwärts gerichtet sind und mit ihren inneren Enden (24) einen Abstand zu dem unter einem niedrigeren Druck ($p_2$) stehenden zweiten Raum einhalten. Das innere Ende (24) jeder Nut (20) steht über eine Verbindungsbohrung (30) mit dem inneren Ende (28) eines Durchlasses (27) in Verbindung, der sich durch das volle Material des Gegenrings (15) erstreckt, auf die vorgegebene Drehrichtung (2) bezogen nach rückwärts gerichtet ist und eine Auslaßöffnung (29) an einer äußeren Umfangsfläche (26) des Gegenrings aufweist. Durch diese Ausbildung unterstützen sich die Durchlässe (27) und Nuten (20) in der Ausbildung von Temperaturgradienten im Gegenring (15), die bei relativ geringer Wärmeentwicklung zu ein vorteilhaftes hydrodynamisches Laufverhalten bewirkenden Verwerfungen der Gleitfläche (17) führen, wobei dieses Laufverhalten wiederum die Wärmeentwicklung reduziert.

Figur 2

## Gleitringdichtung

Die Erfindung betrifft eine Gleitringdichtung zur Abdichtung einer in einer vorgegebenen Drehrichtung um ihre Achse umlaufenden Welle, Swelche durch eine Wandung geführt ist, die einen eine unter Druck stehendes Fluid enthaltenden ersten Raum von einem geringeren Druck aufweisenden zweiten Raum trennt, mit einem drehfest an der Wandung gehaltenen und gegen diese abgedichteten ersten Ringkörper, der eine in einer zur Achse lotrechten Ebene gelegene kreisringförmige erste Stirnfläche aufweist, und mit einem drehfest an der Welle gehaltenen und gegen diese abgedichteten zweiten Ringkörper, der eine der ersten Stirnfläche zugekehrte, ebene, kreisringförmige zweite Stirnfläche aufweist, die an der ersten Stirnfläche unter Bildung gemeinsamer ringförmiger und konzentrisch zur Achse gelegener Gleitflächen (Berührungsflächen) zur Anlage bringbar ist, durch welche an jeder Stirnfläche ein im ersten Raum gelegener radial äusserer Begrenzungskreis und ein im zweiten Raum gelegener radial innere Begrenzungskreis definiert ist, wobei einer der Ringkörper in Richtung der Achse verschiebbar und durch wenigsten eine Feder gegen den anderen Ringkörper vorgespannt ist, in eine der Stirnflächen mehrere gleichgeformte, voneinander getrennte und mit gleichen Winkelabständen angeordnete Nuten eingearbeitet sind, die sich jeweils, ausgehend von einem radial äusseren Ende am radial äusseren Begrenzungskreis, zwischen die Gleitflächen erstrecken und mit ihrem radial inneren Ende einen Abstand zum radial inneren Be grenzungskreis einhalten, in dem zweiten Ringkörper mehrere gleichgeformte und mit gleichen Winkelabständen angeordnete Durchlässe in Abstand von der zweiten Stirnfläche ausgebildet sind, die, ausgehend von ihren mit den radial inneren Nutenden in Verbindung stehenden radial inneren Enden sich zu auf einem größeren Durchmesser aufweisenden und in einer äusseren Umfangsfläche des zweiten Ringkörpers gelegenen Auslaßöffnungen erstrekken und wobei durch eine relative Drehbewegung der beiden Ringkörper in die Nuten eingedrungenes Medium zwischen die Gleitflächen unter Ausbildung von diese trennenden Druckpolstern eingeschleppt wird.

Bei einer bekannten, für die Abdichtung von Gas bestimmten Gleitringdichtung dieser Art verlaufen die Durchlässe in radialer Richtung und münden mit ihren radial inneren Enden in eine im rotierenden Ringkörper (Gleitring) ausgebildete ersten Ringnut ein, welche zu dessen Gleitfläche offen ist. Die Nuten sind in dem nicht-rotierenden Ringkörper (Gegenring) angeordnet, verlaufen ebenfalls in radialer Richtung und münden mit ihren inneren Enden in eine in dem nichtrotierenden Ringkörper (Gegenring) ausgebildete und zu dessen Gleitfläche offene zweite Ringnut ein, welche der ersten Ringnut gegenüberliegt und mit ihrer radial inneren Kante den äusseren Umfang des nutenfreie Bereichs der Gleitfläche bestimmt. Die zwecks Abführung der im Dichtspalt erzeugten Wärme und zur Erzielung einer Gleitflächen-Verwerfung angestrebte Zirkulation des abzudichtenden Fluids durch die Nuten, die zweite und erste Ringnut und die Durchlässe wird ausschließlich durch die Wirkung der Zentrifugalkraft auf das in den Durchlässen enthaltene (gasförmige) Fluid angetrieben und ist daher durch die radiale Länge dieser Durchlässe begrenzt. Weiterhin wird sowohl durch die beiden Ringnuten, als auch durch die Relativbewegung Szu den radialen Nuten die Kühlwirkung des in den Ringkörpern zirkulierten Fluids vergleichmäßigt, so daß die für ein hydrodynamisches Laufverhalten erwünschten Verwerfungen sich nur in geringem Maße ausbilden können.

Aufgabe der Erfindung ist es, eine Gleitringdichtung der eingangs erläuterten Art so weiterzubilden, daß sich eine für den hydrodynamischen Lauf der Gleitflächen besonders günstige Gleitflächen-Verwerfung bei insgesamt niedriger Gleitflächentemperatur erzielen läßt und durch Verbesserung der Schleppströmung an den Nuten der hydrodynamische Lauf unterstütztwird.

Erfindungsgemäß wird diese Aufgabe dadurch gelöst, daß die Nuten in der am zweiten Ringkörper gelegenen und dessen Gleitfläche enthaltenden Stirnfläche ausgebildet sind und daß jeweils eine Nut und ein dieser zugeordneter Durchlaß an oder unmittelbar benachbart zu deren radial inneren Enden durch jeweils eine Verbindungsbohrung miteinander verbunden sind, ohne mit den anderen Nuten und Durchlässen zu kommunizieren.

Aufgrund dieser Ausbildung können die Nuten ebenfalls zur Erzeugung von solchen Temperaturgradienten im umlaufenden Ringkörper (Gegenring) bei tragen, die zu Verwerfungen der Gleitfläche mit in Laufrichtung aufeinanderfolgenden Erhöhungen und Vertiefungen führen. Im Gegensatz dazu führen beim bekannten Stand der Technik die Nuten und auch die hier verwendeten Ringnuten zu einer Vergleichmäßigung der Temperaturverteilung im umlaufenden Ringkörper. Die erfindungsgemäße Gleitringdichtung läßt daher schon bei relativ geringer Wärmeentwicklung im Dichtspalt ein vorteilhaftes hydrodynamisches Laufverhalten erzielen, welches wiederum zur Verminderung der erwähnten Wärmeentwicklung beiträgt. Weiterhin ermöglicht es die erfindungsgemäße Ausbildung, durch geeignete Führung der Nuten eine Schleppwirkung zu erzielen, welche die Zirkulationsströmung erhöht. Gemäß der Erfindung können zu dem letzteren Zweck auch die Durchlässe wenigstens in dem an ihre äusseren Enden angrenzenden Abschnitten unter einem Winkel zu Radialen durch die Achse verlaufen und, bezogen auf die vorgegebene Drehrichtung, nach rückwärts gerichtet sein, so daß sich durch die Sogwirkung deren Pumpeffekt verstärkt. Der auf diese Weise und/oder durch Fliehkraftwirkung erzeugte Unterdruck trägt dazu bei, die Lekkage der Gleitringdichtung zu reduzieren.

Zur Verstärkung des Pumpeffektes und ferner zur Erzielung einer vorteilhaften Schleppströmung verlaufen wenigstens die im Bereich des radial äusseren Begrenzungskreises gelegene Abschnitte der Nuten unter einem Winkel zu Radialen durch die Achse und sind, bezogen auf die vorgegebene Drehrichtung, vorwärts gerichtet.

Weitere Vorteile und Merkmale der Erfindung ergeben sich aus der nachstehende Beschreibung von Ausführungsbeispielen der Erfindung an Hand der Zeichnungen. In den Zeichnungen zeigen:

Fig. 1 einen Längsschnitt durch eine Gleitringdichtung in einer ersten, einfachwirkenden Ausführungsform;

Fig. 2 einen Schnitt gemäß der Linie II - II in Fig. 1;

Fig. 3 einen Längsschnitt durch eine Gleitringdichtung in einer zweiten, doppeltwirkenden Ausführungsform und

Fig. 4 einen Teil-Schnitt gemäß der Linie IV - IV in Fig. 3.

Die um ihre Achse 1 in einer vorgegebenen Drehrichtung 2 umlaufende Welle 3 erstreckt sich durch die Bohrung 4 in einer stirnseitigen Wandung 5 eines Dichtungsgehäuses 6. Die Wandung 5 trennt einen ersten Raum 7, welcher ein Fluid (Flüssigkeit oder Gas) unter einem Druck $P_1$ enthält, von einem zweiten Raum 8, dessen Druck $p_2$ geringer als der Druck $P_1$ ist und der ein gleichartiges oder anderes Fluid enthält oder ein Vakuum aufweist. Im Bereich der Bohrung 4 steht von der Wandung 5 ein rohrförmiger Kragen 9 zum ersten Raum 7 vor, auf dessen zylindrischer äusserer Umfangsfläche ein erster Ringkörper, nämlich der Gleitring 10, axial verschieblich angeordnet und durch einen O-Ring 11 abgedichtet ist. Ein an der Wandung 5 fester achsparalleler Stift 12 steht in eine Sacklochbohrung des Gleitrings 10 ein und hindert diesen an einer Verdrehung. Eine Mehrzahl von Schraubendruckfedern 13 spannt den Gleitring 10 axial in Richtung zum ersten Raum 7 vor. Der Gleitring 10 weist eine dem ersten Raum 7 zugekehrte, zur Achse 1 konzentrisch angeordnete kreisringförmige erste Stirnfläche auf, die in einer zu dieser Achse lotrechten Ebene liegt und völlig eben ist, d.h. weder Nuten noch eine anderweitig strukturierte Oberfläche besitzt.

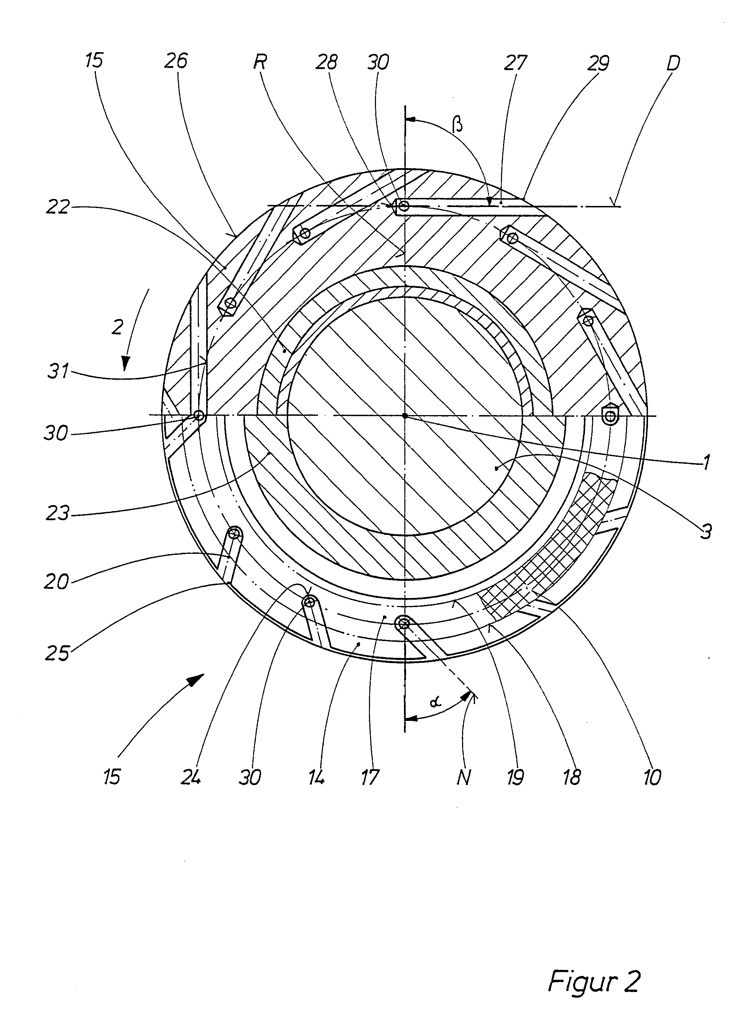

Diese erste Stirnfläche ist mittels der von den Federn 13 und der auf den Gleitring einwirkenden hydraulischen Axialkraft gegen eine ebenfalls in einer zur Achse 1 lotrechten Ebene gelegene zweite Stirnfläche 14 gepreßt, welche an einem zweiten Ringkörper, dem Gegenring 15, ausgebildet ist. Die gemeinsamen Berührungsflächen der beiden Stirnflächen ergeben die Gleitflächen 16, 17, welche zwischen einem ersten Begrenzungskreis 18, an welchem der höhere Druck $P_1$ des ersten Raumes 7 ansteht und einem zweiten Begrenzungskreis 19 gelegen sind, an welchem der niedrigere Druck $P_2$ des zweiten Raumes 8 ansteht. Aufgrund der Durchmesserverhältnisse im veranschaulichten Ausführungsbeispiel entspricht die erste Stirnfläche auch der Gleitfläche 16 am Gleitring 10. Ein Teil dieses Gleitringes 10 ist in der Fig. 2 zur Verdeutlichung eingezeichnete. Die zweite Stirnfläche 14 ist, abgesehen von an späterer Stelle noch näher erläuterten Nuten 20, eben.

Der Gegenring 15 stützt sich mit seiner von der zweiten Stirnfläche 14 abgekehrten anderen axialen Stirnfläche an einem von einer Welienhülse 21 radial nach außen vorstehenden Kragen 22 ab und wird gegen diesen mittels einer Druckhülse 23 vorgespannt. Die Welle 3 ist gegen die damit fest verbunden Wellenhülse 21 und diese wiederum gegen den damit fest verbundenen Gegenring durch O-Ringe abgedichtet, welche in Ringnuten der Wellenhülse angeordnet sind.

Alle Nuten 20 sind gleich geformt und sind in gleichen Winkelabständen zueinander an der Stirnfläche 14 des Gegenrings 15 angeordnet. Jede Nut weist ein (unter Mitwirkung der Gleitfläche 17 des Gleitrings 10) geschlossens, radial inneres Nutende 24 auf ,das einen Abstand von wenigen Millimetern zum radial inneren Begrenzungskreis 19 einhält. Das Nutende 24 ist daher benachbart zu dem den niedrigeren Druck $p_2$ aufweisenden zweiten Raum 8 angeordnet, steht mit diesem aber nicht in Verbindung, abgesehen von einem Leckageweg in dem zwischen den beiden Gleitflächen 16, 17 gebildeten Dichtspalt. Ausgehend von diesem Nutende 24 erstreckt sich die Nut 20 über die Gleitfläche 17 hinweg bis zum radial äusseren Begrenzungskreis 19 und verlängert sich über diesen hinaus bis zum radial äusseren Nutende 25, unmittelbar benachbart zur äusseren Umfangsfläche 26 des Gegenrings 15. Das Innere der Nut 20 erhält daher eine Verbindung mit dem den höheren Druck $P_1$ aufweisenden ersten Raum 7. Jede Nut 20 ist so angeordnet, daß die Längsmittellinie N zwischen den parallelen und geraden Nutflanken einen spitzen Winkel $\alpha$ mit einer durch die Achse 1 gelegten Radialen R bildet und, wie in Fig. 2 veranschaulicht ist, in die vorgegebene Drehrichtung 2 weist.

Der Gegenring 15 enthält weiterhin eine der Zahl der Nuten 20 entsprechende Anzahl von Durchlässen 27, die als im Querschnitt runde Sacklochbohrungen ausgebildet und in gleichen Winkelabständen zueinander angeordnet sind. Die geraden Längsachsen D aller Durchlässe 27 liegen in einer gemeinsamen, zur Achse 1 lotrechten Ebene, die um eine angenähert dem Durchmesser der Durchlässe 27 entsprechende Strecke von der Gleitfläche 17 zur Mitte des Gegenringes hin versetzt ist. Die radial inneren Enden 28 der Durchlässe sind von der Achse 1 in jeweils dem gleichen Abstand angeordnet,der im wesentlichen auch dem Abstand entspricht, den die radial inneren Nutenden von dieser Achse einhalten. Ferner liegt jeweils ein radial inneres Ende 28 eines Durchlasses 27 und ein radial inneres Ende 24 einer zugeordneten Nut 20 auf derselben achsparallelen Geraden (wie dies aus Fig. 2 in der Mitte links zu ersehen ist). Unmittelbar benachbart zu ihrem radial Inneren Ende mündet in jeden Durchlaß 27 eine parallel zur Achse 1 geführte Verbindungsbohrung 30 ein, die diesem Durchlaß mit seiner ihm zugeordneten Nut 20 verbindet.

Die Durchlässe 27 sind jeweils unter einem Winkel $\beta$ von 90° zu durch die Achse 1 gelegten Radialen R angeordnet, d.h. ihre Längsachsen D tangieren einen Kreis 31 um die Achse 1, der die Längsachsen aller Verbindungsbohrungen 30 ent-hält. Die Durchlässe 27, deren radial äusseren Enden 29 an der äusseren Umfangsfläche 26 des zweiten Ringkörper 15 liegen, sind entgegengesetzt zur vorgegebenen Drehrichtung 2 gerichtet.

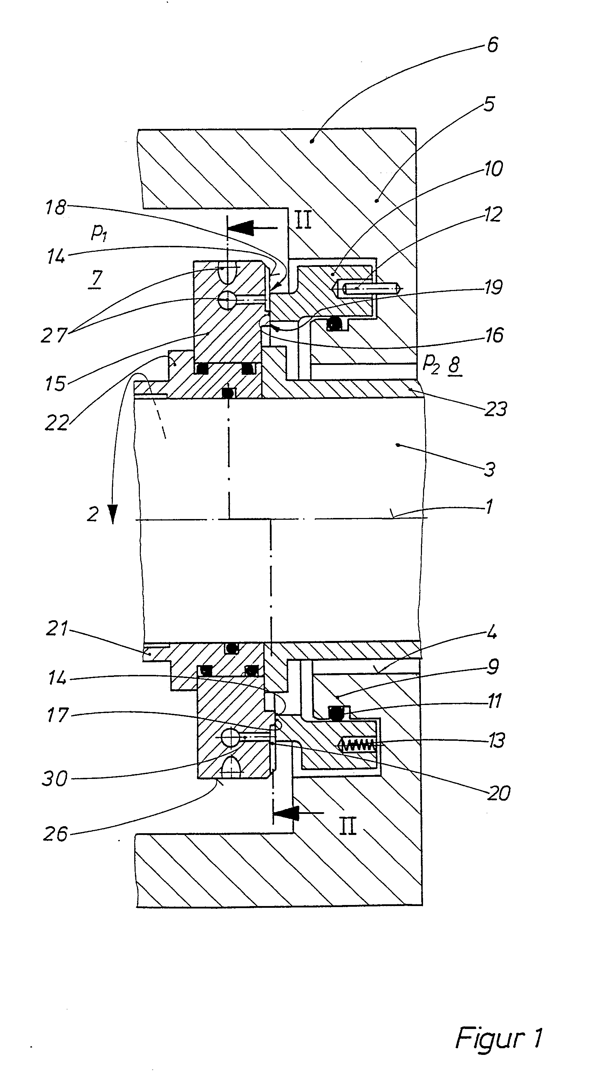

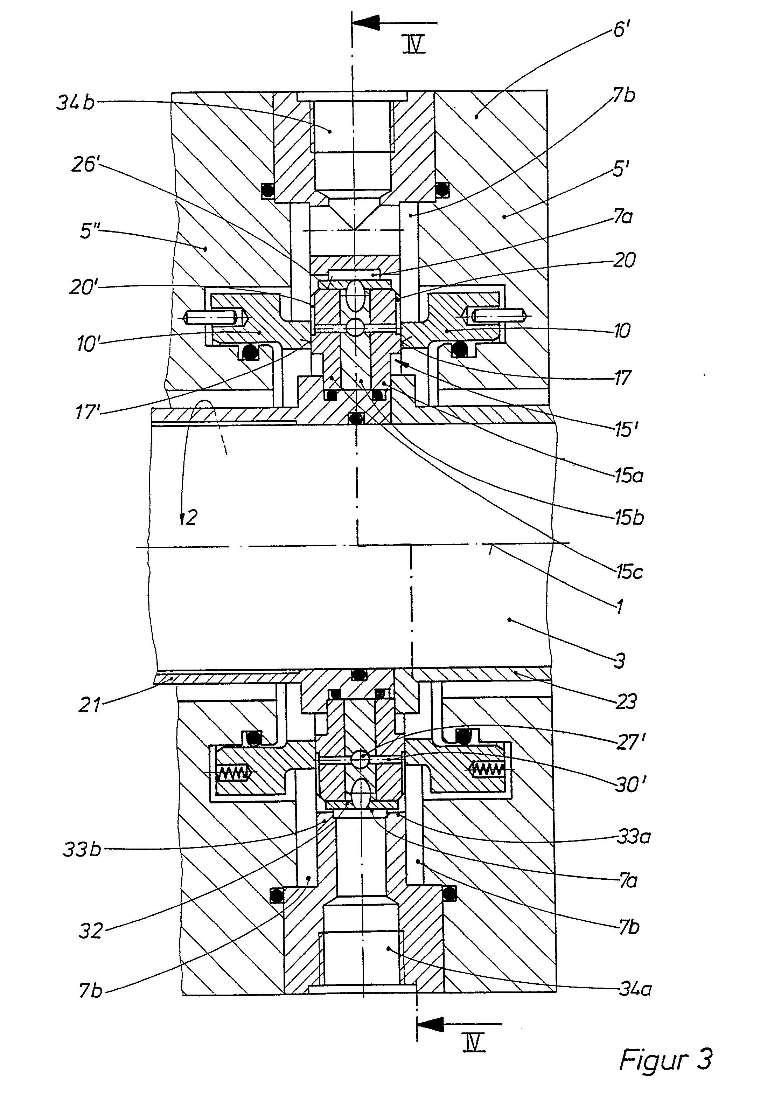

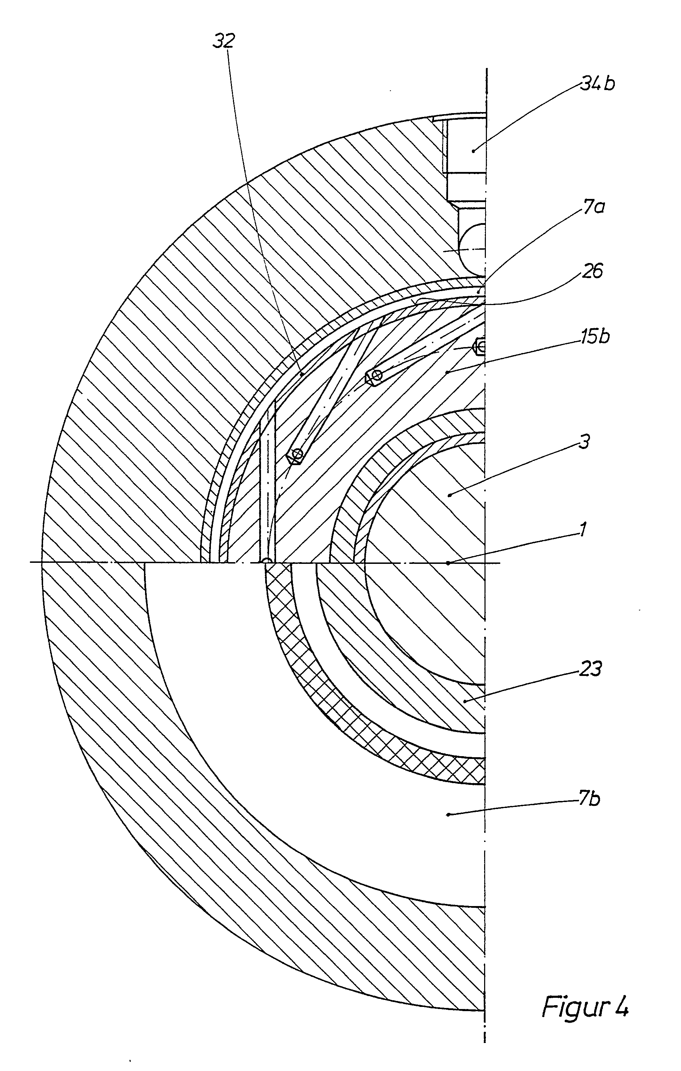

Die in den Fig. 3 und 4 veranschaulichte zweite Ausführungsform ist eine Gleitringdichtung in doppelt wirkender Ausbildung. Gleichgestaltete und gleichwirkende Bauteile sind mit den gleichen Bezugs zeichen (ggf. ergänzt durch Indizes) wie in der ersten Ausführungsform nach Fig. 1 und 2 versehen, so daß zu deren näheren Erläuterung auf die vorstehende Beschreibung verwiesen wird. Der auf jeder axialen Stirnfläche mit einer Gleitfläche 17, 17' versehene Gegenring 15' besteht aus zwei endseitigen Ringscheiben 15a, 15c und einer zentralen Ringscheibe 15b, in der die Durchlässe 27' ausgebildet sind. Die Ringscheiben sind fest miteinander und mit der Wellenhülse 21 verbunden und sind von einer Bandage 32 mit Durchtrittsöffnungen im Bereich der Durchlässe 27' umgeben. Durchgehende Verbindungsbohrungen 30' verbinden jeweils zwei in unterschiedlichen Gleitflächen 17, 17' angeordnete Nuten 20, 20' mit einem der Durchlässe 27'.

Innerhalb des Dichtungsgehäuses 6' sind Trennwände 33a, 33b unter Bildung von Drosselspalten bis nahe an die Bandage 32 herangeführt, welche den den höheren Druck aufweisenden, vom Dichtungsgehäuse umschlossenen Raum in zwei Kammern 7a, 7b aufteilen, von denen jede über eine Bohrung 34a, 34b an einen (nicht dargestellten) externen Rezirkulationskreis anschließbar ist, der einen Kühler und/oder ein Filter enthalten kann. Die Kreislaufströmung durch diesen externen Zirkulationskreis wird dabei durch die Pumpwirkung der im Gegenring enthaltenen Durchlässe und Nuten bewirkt.

Die in erfindungsgemäß ausgebildeten Gleitringdichtungen enthaltenen Nuten und Durchlässe können auch bei anderen Ausführungsformen durch Verwendung geeigneter Trennwände dazu herangezogen werden, ein Fluid durch einen externen Zirkulationskreis zu pumpen.

Ein Betrieb in einer Drehrichtung entgegengesetzt zur bevorzugten Drehrichtung ist möglich, wobei aber die Vorteile der erfindungsgemäßen Gleitringdichtung nicht so stark hervortreten.

## Ansprüche

Gleitringdichtung zur Abdichtung einer in einer vorgegebenen Drehrichtung (2) um ihre Achse (1) umlaufenden Welle (3), welche durch eine Wandung (5; 5', 5") geführt ist, die einen ein unter Druck ($p_1$) stehendes Fluid enthaltenden ersten Raum (7) von einem geringeren Druck ($p_2$) aufwei-senden zweiten Raum (8) trennt,
mit einem drehfest an der Wandung (5; 5', 5")-gehaltenen und gegen diese abgedichteten ersten Ringkörper (10; 10'), der eine in einer zur Achse (1) lotrechten Ebene gelegene kreisringförmige erste Stirnfläche aufweist, und
mit einem drehfest an der Welle (3) gehaltenen und gegen diese abgedichteten zweiten Ringkörper (15; 15'), der eine der ersten Stirnfläche zugekehrte, ebene, kreisringförmige zweite Stirnfläche (14; 14') aufweist, die an der ersten Stirnfläche unter Bildung gemeinsamer ringförmiger und konzentrisch zur Achse gelegener Gleitflächen (Berührungsflächen) (16, 17; 17') zur Anlage bringbar ist, durch welche an jeder Stirnfläche ein im ersten Raum (7) gelegener radial äusserer Begrenzungskreis (18) und ein im zweiten Raum (8) gelegener radial innerer Begrenzungskreis (19) definiert ist, wobei
einer der Ringkörper (10; 10') in Richtung der Achse (1) verschiebbar und durch wenigstens eine Feder (13) gegen den anderen Ringkörper (15) vorgespannt ist,
in eine der Stirnflächen (14; 14') mehrere gleich geformte, voneinander getrennte und mit gleichen Winkelabständen angeordnete Nuten (20; 20') eingearbeitet sind, die sich jeweils, ausgehend von einem radial äusseren Ende (25) am radial äusseren Begrenzungskreis (18), zwischen die Gleitflächen (16, 17; 17') erstrecken und mit ihrem radial inneren Ende (24) einen Abstand zum radial inneren Begrenzungskreis (19) einhalten,

in dem zweiten Ringkörper (15; 15') mehrere gleichgeformte und mit gleichen Winkelabständen angeordnete Durchlässe (27; 27') in Abstand von der zweiten Stirnfläche (14; 14') ausgebildet sind, die, ausgehend von ihren mit den radial inneren Nutenden (24) in Verbindung stehenden radial inneren Enden (28), sich zu auf einem größeren Durchmesser aufweisenden und in einer äußeren Umfangsfläche (26; 26') des zweiten Ringkörpers (15; 15') gelegenen Auslaßöffnungen (29) erstrecken und wobei durch eine relative Drehbewegung der beiden Ringkörper (10; 10'; 15; 15') in die Nuten (20; 20') eingedrungenes Medium zwischen die Gleitflächen (16; 17; 17') unter Ausbildung von diese trennenden Druckpolstern eingeschleppt wird, **dadurch gekennzeichnet,**
daß die Nuten (20, 20') in der am zweiten Ringkörper (15, 15') gelegenen und dessen Gleitfläche (17) enthaltenden Stirnfläche (14, 14') ausgebildet sind und
daß jeweils eine Nut und ein dieser zugeordneter Durchlaß (27; 27') an oder unmittelbar benachbart zu deren radial inneren Enden (24,28) durch jeweils eine Verbindungsbahrung (30; 20') miteinander verbunden sind, ohne mit den anderen Nuten und Durchlässen zu kommunizieren.

2. Gleitringdichtung nach Anspruch 1, **dadurch gekennzeichnet,** daß die Durchlässe (27; 27') wenigstens in den an ihre äussere Enden (29) angrenzenden Abschnitten unter einem Winkel (ß) zu Radialen (R) durch die Achse (1) verlaufen und, bezogen auf die vorgesehene Drehrichtung (2), nach rückwärts gerichtet sind.

3. Gleitringdichtung nach Anspruch 1 und 2, **dadurch gekennzeichnet,** daß die Durchlässe (27; 27') geradlinig verlaufende Längsachsen (D) aufweisen, welche in einer gemeinsamen, zur Achse (1) lotrechten Ebene liegen.

4. Gleitringdichtung nach Anspruch 2 und 3, **dadurch gekennzeichnet,** daß die Durchlässe (27; 27') von im Querschnitt runden Sacklochbohrungen gebildet sind.

5. Gleitringdichtung nach Anspruch 3, **dadurch gekennzeichnet,** daß die Längsachsen (D) der Durchlässe (27; 27') Tangenten an an einen Kreis (31) bilden, der die Längsachsen der Verbindungsbohrungen (30; 30') enthält.

6. Gleitringdichtung nach Anspruch 1 und 2, **dadurch gekennzeichnet,** daß wenigstens die im Bereich des radial äusseren Begrenzungskreisen (18) gelegenen Abschnitte der Nuten (20; 20') unter einem Winkel (α) zu Radialen (R) durch die Achse (1) verlaufen und, bezogen auf die vorgegebene Drehrichtung (2), nach vorwärts gerichtet sind.

7. Gleitringdichtung nach Anspruch 6, **dadurch gekennzeichnet,** daß die Nuten (20; 20') gerade Längsmittellinien (N) und hierzu im wesentlichen parallele Seitenflanken aufweisen und sich, ausgehend von ihren radial inneren Enden (24) über den radial äusseren Begrenzungskreis (18) hinaus bis nahe zur äusseren Umfangsfläche (26) des zweiten Ringkörpers (15; 15') erstrecken.

8. Gleitringdichtung nach Anspruch 1, **dadurch gekennzeichnet,** daß die radial inneren Enden (24, 28) der Nuten (20;20') und der Durchlässe (27; 27') angenähert die gleichen Abstände zur Achse (1) aufweisen, daß die radial inneren Enden jedes Paares von einander zugeordneter Nuten und Durchlässe jeweils angenähert auf der gleichen achsparallelen Geraden liegen und daß die Verbindungsbohrungen (30; 30') parallel zur Achse verlaufen.

9. Gleitringdichtung in doppelt wirkender Ausbildung nach einem oder mehreren der vorhergehenden Ansprüche, **dadurch gekennzeichnet,** daß der zweite Ringkörper (15') auf in entgegengesetzte Axialrichtungen weisenden Stirnflächen je eine mit Nuten (20; 20') ausgestattete Gleitfläche (17; 17') aufweiset, daß die Durchlässe (27') mit ihren Längsachsen (D) auf einer mittig zwischen den beiden Gleitflächen gelegenen Ebene angeordnet sind und daß sich die Verbindungsbohrungen (30') jeweils von einer in der einen Gleitfläche (17) gelegenen Nut (20) zu einer auf der anderen Gleitfläche (17') gelegenen Nut (20') erstrecken und durch das radial innere Ende des zugeordneten Durchlasses (27') verlaufen.

10. Gleitringdichtung nach Anspruch 9, **dadurch gekennzeichnet,** daß der zweite Ringkörper (15') aus drei axial aufeinanderfolgenden Ringscheiben (15'a, 15'b, 15'c) zusammengesetzt ist, wobei in der zentralen Ringscheibe (15'b) die Durchlässe (27') ausgebildet sind.

11. Gleitringdichtung nach Anspruch 1, 9 oder 10, dadurch gekennzeichnet , daß auf die äussere Umfangsfläche (26) des zweiten Ringkörpers (15') eine Bandage (32) aufgezogen ist, welche im Bereich der äusseren Enden (29) der Durchlässe (27') Durchtrittsöffnungen aufweist

12. Gleitringdichtung nach Anspruch 1 oder 11 **dadurch gekennzeichnet,** daß an dem axialen Längenabschnitt der äusseren Umfangsfläche des zweiten Ringkörpers (15') bzw. seiner Bandage (32), der zwischen die Nuten (20; 20') enthaltenden Stirnfläche und einem die Auslaßöffnungen der Durchlässe (27') enthaltenden axialen Längenabschnitt gelegen ist, jeweils eine Trennwand (33a, 33b) des Dichtungsgehäuses (6') unter Bildung eines Drosselspaltes herangeführt ist, welche innerhalb des den höheren Druck aufweisenden ersten Raumes eine mit den Auslaßöffnungen der Durchlässe in Verbindung stehende erste Kammer (7a) von einer mit den radial äusseren Enden der Nuten (20; 20') in Verbindung stehendenzweite Kammer (7b) trennt, wobei jede Kammer eine die Gehäusewandung durchdringende Bohrung (34a, 34b) aufweist und die beiden Bohrungen an einen externen Rezirkulationskreislauf anschließbar sind.

*Figur 1*

*Figur 2*

Figur 3

Figur 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A- 685 282 (SHELL) <br> * Ganzes Dokument * <br> --- | 1,7,9 | F 16 J 15/34 |
| Y | DE-B-1 221 865 (MAYER) <br> * Spalte 3, Zeile 45 - Spalte 4, Zeile 24; Figuren 1-2 * <br> --- | 1,2,6 | |
| A | E. MAYER: "Mechanical Seals", 1972, ILIFFE Books, Londen, GB, Seiten 87-93 <br> --- | 1,2,6 | |
| A | DE-B-1 212 800 (BORG-WARNER) <br> * Spalte 5, Zeile 26 - Spalte 6, Zeile 62; Figuren 2-6 * <br> --- | 1 | |
| A | DE-A-3 619 489 (MAN) <br> * Spalte 2, Zeile 65 - Spalte 3, Zeile 4; Spalte 4, Zeilen 26-28; Fig. * <br> --- | 1 | |
| A | FR-A-2 136 247 (GENERAL ELECTRIC) <br> * Figuren 2,7 * <br> ----- | 1 | |

RECHERCHIERTE SACHGEBIETE (Int. Cl.5)

F 16 J

Der vorliegende Recherchenbericht wurde für alle Patentansprüche erstellt

| Recherchenort | Abschlußdatum der Recherche | Prüfer |
|---|---|---|
| DEN HAAG | 28-03-1990 | LEGER M.G.M. |